# EUROPEAN PATENT APPLICATION

(11) **EP 0 889 174 A2**
(43) Date of publication of application: **07.01.1999**
(21) Application number: 98500089.2
(22) Date of filing: 14.04.1998
(51) Int. Cl.: E03D 5/00

(54) **Water recycling device for lavatory flushing**

(30) Priority: 16.04.1997 ES 9700995 U
(71) Applicant: Hiazul S.L., 47014 Valladolid (ES)
(72) Inventor: Gaona, Juan Andres Diaz, 47104 Valladolid (ES)

(57) **Abstract**

WATER RECYCLING DEVICE FOR LAVATORY FLUSHING, which being of the type made up of closed cisterns (1), consists of two tanks (2), separated by a variable-height wall (3), and which has an access in its upper section (4), and as it has two tanks, four openings are made in the ceiling of the cistern in which four pipes are installed (5), one in each opening, of which two have their vertical projection into the first tank (6) and the remaining two into the adjacent tank (7), at the end of one of the pipes a plug is placed (8), and in this pipe openings at specific distances are made up to a variable height (9), and in another of the pipes an opening is made above the water overflow level (10), and from a separate receptacle two water level measuring devices are lowered, one of which determines the maximum level and the other the minimum (11), and in the upper part of the walls water overflow channels are made (12), the floor of each tank is sloped (13), and the lower part of the bottom of each tank has a drain (14), and in the upper part of the walls a hook is intalled with two chains connected to two plugs, one for each tank (15), and in the outer walls a stopcock is placed in each tank below the bottom of the cistern and above the exitway to the general collectors of the lavatory (16), and pump motors are placed in a separate receptacle above the cistern (17).

## Description

### OBJECTIVE OF THE INVENTION

This invention, as indicated in the title of this descriptive statement, refers to a device for recycling water from bathtubs, showers and rain water, to reutilize it for lavatory flushing. The device has been conceived and assembled in such a way that it presents numerous important advantages over other existing methods for similar objectives.

The device is set up so that the tanks which constitute the cistern collect rainwater and water from baths and showers and recycle them to the lavatories by means of pump motors.

To this end, the device also includes the installation of four pipes, two of which serve to collect water, while the other two supply it to the lavatory. Likewise, two level measurers are installed to determine the maximum and minimum level of the water stored in one of the tanks.

### PREDECESSOR OF THE INVENTION

Other devices for the utilisation of rain water are known to exist, as well as devices for recycling of water from baths and showers.

In this respect, devices based on the storage of rain water in cisterns, transferred and utilised by means of systems based on gravity can be mentioned. This method presents the inconvenience of not collecting water from baths and showers for lavatory reutilization.

There is likewise another device for recycling water from baths and showers, which consists in the storage of such water. However, this system possesses the inconvenience of performing the water transfer to the lavatories by rudimentary procedures, neither mechanical nor based on gravity.

### DESCRIPTION OF THE INVENTION

The device of the invention presents a new structure, through which it is possible to store the water collected from baths and showers as well as rain water in order to recycle it in lavatories in an easy-to-use manner. To effect this process, the device is based on a closed cistern, with two tanks which are separated by a wall of variable height, with four opening in which four pipes are installed, one in each opening; rain water is collected through one pipe and water from baths and showers through another, both pipes having their vertical projection into the same tank; the other two pipes have their vertical projection into the other tank, one pipe serving to supply water to the lavatories by pump motors while the last pipe serves to provide tap water to the cistern.

In the latter tank, two water level measurers which determine the maximum and minimum level of the water stored there are placed; these measuring devices are lowered from a separate outer receptacle.

In order to complement the description which follows immediately below, and to lead to a better understanding of the characteristics of the invention, this descriptive statement is accompanied by a set of drawings which make it easier to see the innovations and advantages of the invention.

### BRIEF DESCRIPTION OF THE DRAWINGS

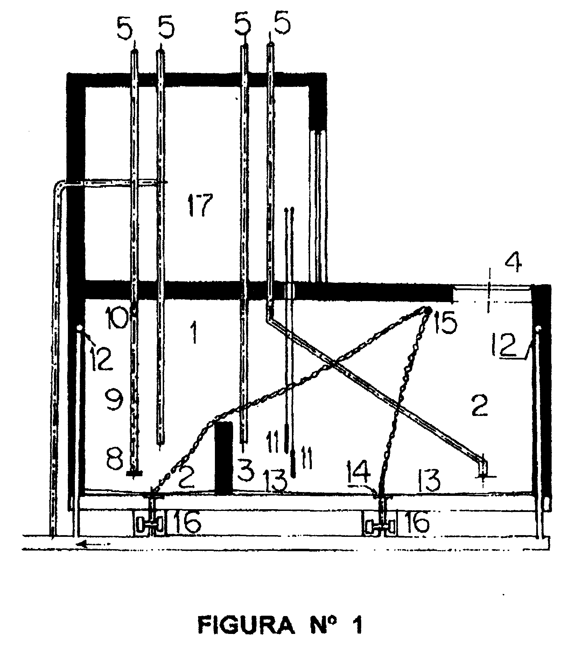

Figure 1.- Presents a section elevation perspective in which the different pieces constituting the device can be seen.

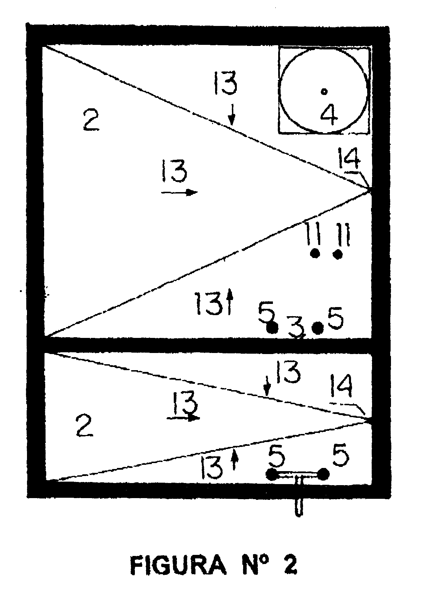

Figure 2.- Presents a view from above the device, in which the parts of the invention can be seen.

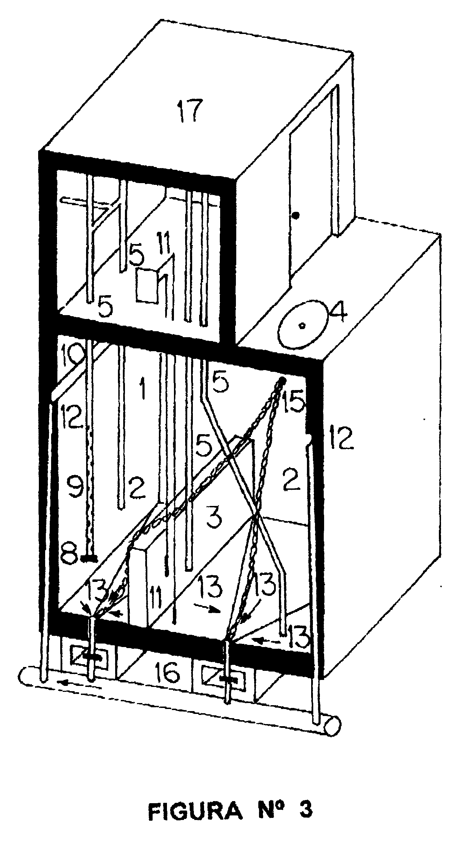

Figure 3.- Presents an open, frontal view in which the set of the different elements comprising the device can be observed.

### DESCRIPTION OF THE PREFERRED DEVICE ASSEMBLY

Based on the figures mentioned above, it can be seen that the device is composed on a closed cistern (1), which is formed in tum by two tanks (2), in the first of which both rain water as well as water from baths and showers is collected and, when the level of the separating wall of variable height is reached (3), the water pours into the second tank; and that the cistern has an access in its upper section (4), and that four openings are made in the top of this cistern, where four pipes are installed, one in each opening (5), two of which have their vertical projection into the first tank (6) and the remaining two into the adjacent tank (7); in the first tank a plug is placed at the end of the pipe for bath and shower water collection (8), and in this pipe a variable number of openings at specific distances up to a variable height are made (9), and an opening above the spillway level is made in the other pipe whose vertical projection is the first tank (10), and that two measuring devices are lowered from a receptacle separate from the cistern, one of which determines the maximum level of water available for supplying the lavatories and the other the minimum level; when the water level falls below the minimum, water supply by means of the other pipe in the second tank enters into operation (11), and that in the upper part of two of the cistern walls overflow channels are made (12), the bottom of the tanks are sloped (13), and a drain is installed in the lower part of the bottom of each tank (14), and in the upper part of the walls a hook with two chains connected to both plugs, one for each tank, is placed (15), and in the outer walls a stopcock for each tank is installed below the bottom of the cistern and above the exitway to the general collectors of the lavatory (16), and that pump motors are installed above the cistern in a separate receptacle (17).

## Claims

1. WATER RECYCLING DEVICE FOR LAVATORY FLUSHING, which being of the type made up of closed cisterns (1), consists of two tanks (2), separated by a variable-height wall (3), and which has an access in its upper section (4), and as it has two tanks, four openings are made in the ceiling of the cistern in which four pipes are installed (5), one in each opening, of which two have their vertical projection into the first tank (6) and the remaining two into the adjacent tank (7), at the end of one of the pipes a plug is placed (8), and in this pipe openings at specific distances are made up to a variable height (9), and in another of the pipes an opening is made above the water overflow level (10), and from a separate receptacle two water level measuring devices are lowered, one of which determines the maximum level and the other the minimum (11), and in the upper part of the walls water overflow channels are made (12), the floor of each tank is sloped (13), and the lower part of the bottom of each tank has a drain (14), and in the upper part of the walls a hook is installed with two chains connected to two plugs, one for each tank (15), and in the outer walls a stopcock is placed in each tank below the bottom of the cistern and above the exitway to the general collectors of the lavatory (16), and pump motors are placed in a separate receptacle above the cistern (17).
